# EUROPÄISCHE PATENTSCHRIFT

(11) **EP 2 479 584 B1**
(45) Veröffentlichungstag und Bekanntmachung des Hinweises auf die Patenterteilung: **01.04.2015**
(21) Anmeldenummer: 12150695.0
(22) Anmeldetag: 11.01.2012
(51) Int. Cl.: G01S 5/16, G01S 5/02, G05D 1/02

(54) **Verfahren zur Bestimmung der Position eines selbsttätig verfahrbaren Geräts**
Method for determining the position of a self-propelled device
Procédé de détermination de la position d'un appareil automobile

(30) Priorität: 21.01.2011 DE 102011000250
(43) Veröffentlichungstag der Anmeldung: 25.07.2012
(73) Patentinhaber: Vorwerk & Co. Interholding GmbH, 42275 Wuppertal (DE)
(72) Erfinder: Sauerwald, Andres, 46238 Bottrop (DE); Wallmeyer, Mario, 40217 Düsseldorf (DE)
(74) Vertreter: Müller, Enno

(56) Entgegenhaltungen:
- EP-A1- 1 923 763
- HUGH DURRANT-WHYTE ET AL: "Simultaneous Localisation and Mapping (SLAM): Part I The Essential Algorithms", ROBOTICS & AUTOMATION MAGAZINE, 5. Juni 2006 (2006-06-05), Seiten 99-110, XP055066899,
- DAVIDSON P ET AL: "Application of Particle Filters for Vehicle Positioning using Road Maps", GNSS 2010 - PROCEEDINGS OF THE 23RD INTERNATIONAL TECHNICAL MEETING OF THE SATELLITE DIVISION OF THE INSTITUTE OF NAVIGATION (ION GNSS 2010), THE INSTITUTE OF NAVIGATION, 8551 RIXLEW LANE SUITE 360 MANASSAS, VA 20109, USA, 24. September 2010 (2010-09-24), Seiten 1653-1661, XP056000282,

## Beschreibung

Die Erfindung betrifft ein Verfahren zur Bestimmung der Position eines selbsttätig verfahrbaren Geräts, insbesondere selbsttätig verfahrbaren Bodenstaub-Aufsammelgeräts, mit vorzugsweise elektromotorisch angetriebenen Verfahrrädern, wobei das Gerät mit einer Hinderniserkennung versehen ist, die aus optischen Sende- und Empfängereinheiten besteht, wobei weiter eine Vielzahl von möglichen Positionen und Ausrichtungen (Partikel) ausgehend von einer angenommenen ersten, vorher berechneten Position des Gerätes berechnet werden, eine mögliche Position und/oder eine Ausrichtung des Gerätes ist hierbei auch als Partikel bezeichnet, und nach einem entsprechenden Verfahren des Geräts im Hinblick auf die dann eingenommene zweite Position anhand der Messergebnisse der optischen Einheiten einer der zuvor generierten Partikel nach einem vorgegebenen, die Wahrscheinlichkeit berücksichtigenden Auswahlalgorithmus als neuer Standort des Geräts angenommen wird.

Verfahren der in Rede stehenden Art sind bekannt, so bspw. im Zusammenhang mit selbsttätig verfahrbaren Saug- und/oder Reinigungsgeräten zur Abreinigung von Fußböden, darüber hinaus in weiterer Ausgestaltung bspw. im Zusammenhang mit einem selbsttätig verfahrbaren Transportgerät oder Rasenmähgerät. Derartige Geräte sind bevorzugt mit Abstandssensoren versehen, um so bspw. einer Kollision mit im Verfahrweg stehenden Gegenständen oder dergleichen entgegenzuwirken. Diese Sensoren arbeiten bevorzugt berührungslos, so weiter bevorzugt als Licht- oder Ultraschallsensoren. Hierzu ist es weiter bekannt, das Gerät mit Mitteln zur Rundum-Abstandsmessung zu versehen, so weiter bspw. in Form eines optischen Triangulationssystems, welches auf einer um eine Vertikalachse rotierenden Plattform oder dergleichen angeordnet ist. Mittels eines solchen Systems können Abstandsmessungen zufolge Reflektionen erreicht werden, welche Abstandsmessungen zur Raumorientierung, weiter insbesondere im Zuge der selbsttätigen Arbeit zur Hinderniserkennung sowie weiter bevorzugt zum Anlegen einer Karte der zu befahrenden Räumlichkeit und somit entsprechend zur Erstellung einer Kartierung genutzt werden. Diesbezüglich wird bspw. auf die DE 10 2008 014 912 A1 verwiesen. Die zufolge der Abstandsmessung erfassten Raumbegrenzungen, ggf. unter Berücksichtigung etwaiger Hindernisse in den Räumen, werden bevorzugt in Form einer Kartierung der Umgebung, insbesondere der aus mehreren Räumen bestehenden Wohnung abgelegt, weiter bevorzugt in einem nicht flüchtigen Speicher des Gerätes, so dass im Zuge eines Reinigungs- oder Transportvorganges auf diese Kartierung zur Orientierung zurückgegriffen werden kann. Weiter ist diesbezüglich bekannt, anhand einer derart hinterlegten Kartierung zufolge weiter hinterlegter Algorithmen eine günstige Verfahrstrategie des Gerätes zu ermitteln, dies weiter auch bei Erkennung eines bevorzugt im Verfahrweg des Gerätes liegenden und über den Sensor erfassten Gegenstandes. Hierzu ist jeweils eine möglichst exakte Ermittlung des Abstandswertes zu dem Gegenstand, wie bspw. ein Möbel oder einer Wandbegrenzung, nötig.

Darüber hinaus sind Verfahren zur simultanen Lokalisation und Kartenbildung bekannt, so insbesondere unter dem Begriff SLAM. Diesbezüglich wird auf den wissenschaftlichen Artikel "Simultaneous Lokalisation and Mapping (SLAM)" Hugh Durrant-Whyte, Fellow, IEEE and Tim Bailey, Part I, erschienen im Magazin "Robotics & Automation Magazine, IEEE", Juni 2006, verwiesen. SLAM behandelt hierbei das Problem eines beweglichen Roboters, der sich durch eine Umgebung bewegt, von der keine Karte vorhanden ist. Der Roboter bildet relative Beobachtungen von seiner Ego-Bewegung und von den Eigenschaften in seiner Umgebung. Das Ziel von SLAM ist eine Karte der Umgebung und des Weges aufzubauen, die durch den Roboter bzw. das selbsttätig verfahrbare Gerät erstellt und benutzt werden kann. Zum Auffinden der tatsächlichen Position wird hierbei eine Vielzahl von möglichen Gerätepositionen und Orientierungen untersucht. Eine mögliche Geräteposition und/oder Ausrichtung wird im SLAM als Partikel bezeichnet, wobei jeder dieser Partikel für eine mögliche Geräteposition und/oder Ausrichtung steht. Eine wahrscheinliche Position wird hierbei als ein Partikel mit einer hohen Gewichtung repräsentiert. Ein unwahrscheinliches Partikel erhält demzufolge eine niedrige Gewichtung und trägt kaum bis hin zu gar nicht zur Lokalisierung bei. Wird das Gerät bewegt, werden im Folgenden Partikel um die wahrscheinlichste Position und Ausrichtung "gestreut". "Streuen" bedeutet hierbei, dass Partikel aus der letzten Generation nachfolgend weitere Partikel generieren, die dann für die neue Position des Gerätes stehen. Im Anschluss an das Streuen der Partikel werden diese Partikel mit dem Messergebnis der optischen Einheiten abgeglichen und entsprechend gewichtet. Das Partikel-Streuen wird hierbei üblicherweise auf eine feste Anzahl, bspw. eintausend, beschränkt. Die Partikel werden dann um die wahrscheinlichste aktuelle Position gemäß einer Gaußverteilung gestreut.

Zum Stand der Technik ist auch auf die EP 1 923 763 A1 und die Veröffentlichung Davidson P et al: "Application of Particle Filters for Vehicle Positioning using Road Maps", GNSS 2010 - Proceedings of the 23rd International Technical Meeting of the Satellite Division of the Institute of Navigation, 8551 Rixlew Lane Suite 360 Manassas, VA 20109, USA, 24. September 2010, Seiten 1653-1661, XP056000282.

Im Hinblick auf den bekannten Stand der Technik wird eine technische Problematik der Erfindung darin gesehen, ein Verfahren der in Rede stehenden Art weiter zu verbessern.

Diese Problematik ist bei dem Gegenstand des Anspruches 1 gelöst, wobei darauf abgestellt ist, dass die größte Ausdehnung einer berechneten Partikelwolke mit einer ersten Achse eines Koordinatensystems unterlegt wird und dass hiervon ausgehend die Abweichung der Partikel in Richtung der anderen, zweiten Koordinatenachse erfasst wird, dass weiter die Partikel sämtlich in die erste Koordinatenachse projiziert werden und eine so erfasste Partikelverteilung mit einer Häufigkeitskurve unterlegt wird, wobei ein Maximum der Häufigkeitskurve als Näherung der tatsächlichen Position des Gerätes bewertet wird. Zufolge der vorgeschlagenen Lösung ist die Lokalisierung der eingenommenen Position des Gerätes insbesondere unter Nutzung des SLAM-Verfahrens verbessert.

Aus dem Stand der Technik ist bekannt, für jeden Streuvorgang die Gaußverteilung neu zu berechnen. Entsprechend erhöht sich der Rechenaufwand (Gaußberechnungen) je mehr Partikel gestreut werden. Insbesondere treten hierbei eine Vielzahl an Gaußberechnungen auf, die durch die enthaltenen Exponentialfunktionen sehr rechenintensiv sind. Dies kann dazu führen, dass sehr leistungsstarke Mikroprozessoren eingesetzt werden müssen. Die Mittelung aller gestreuten Partikel zur Extrahierung der Lokalisierungsposition aus den Partikeln erweist sich als nicht ausreichend genau, da bspw. im Falle eines sehr großen Suchraumes und bei einer großen Varianz der sich ergebende Mittelwert aller gestreuter Partikel einen Ort ergeben kann, der sehr ungenau ist.

Sind weiter bspw. Hindernisse im Raum vorhanden, kann es vorkommen, dass sich der ergebende Mittelwert im Bereich eines Hindernisses liegt, da die Partikel um dieses Hindernis herum gestreut sein können. Auch ist die Lokalisierung unter Nutzung der Wahl des Partikels mit der höchsten Gewichtung ungenau, da hierbei die ermittelte Genauigkeit dadurch beeinträchtigt werden kann, dass mehrere Partikel mit ähnlich hoher Wahrscheinlichkeit über einen Bereich von bspw. einigen Zentimetern verstreut sind und hierbei nur ein Partikel ausgewählt wird, der die höchste Wahrscheinlichkeit aufweist.

Eine wichtige Information zur Beurteilung der aktuellen Lokalisierungsgenauigkeit bietet die Betrachtung der aktuellen Partikelstreuung. Wird von allen gestreuten Partikeln die Varianz berechnet, so wird zufolge des vorgeschlagenen Verfahrens hieraus auf die aktuelle Lokalisierungsgenauigkeit bzw. die Sicherheit in der zu bestimmenden Position des Gerätes geschlossen. Die Auswertung der Varianz wird genutzt, um weitere wertvolle Informationen über die Positionsgenauigkeit zu gewinnen. Mit dem vorgeschlagenen Verfahren wird daher die Varianz aller gestreuten Partikel analysiert, um hierdurch die SLAM-Lokalisierung zu verbessern. Ist die Varianz sehr gering, sind entsprechend alle Partikel quasi an einem Ort, so ist die Genauigkeit der Position bereits relativ gut mit jedem der Partikel wiedergegeben. Ist die Varianz und so entsprechend die größte Ausdehnung der berechneten Partikelwolke hingegen sehr groß, so ist die aktuelle Positionierungsgenauigkeit im Vergleich zu vorbeschriebenem Fall eher ungenau und damit unbekannter. Insbesondere hier setzt das vorgeschlagene Verfahren analysierend an.

Es erfolgt bevorzugt eine Auswertung der größten Ausdehnung der Partikelwolke in unterschiedliche Richtungen, bevorzugt in zwei senkrecht zueinander gerichtete Richtungen, dies weiter bevorzugt zufolge Unterlegung der Partikelwolke mit einem Koordinatensystem. Ist hierbei die Partikelvarianz in einer Richtung (bspw. in Richtung einer Koordinatenachse) eher schmal (vergleichbare geringe Partikelwolken-Ausdehnung), so wird verfahrensmäßig daraus geschlossen, dass eine relativ gute Lokalisierung in Bezug auf diese Koordinatenachsenausrichtung vorliegt. Eine große Ausdehnung in Richtung einer Koordinatenachse hingegen liefert die Information, dass in dieser Richtung bei der Positionsbestimmung eine höhere Ungenauigkeit vorhanden ist.

Zumindest bei Überschreiten eines vorgegebenen Varianz-Schwellwertes erfolgt verfahrensgemäß eine weitere Analysierung. Weiter bevorzugt erfolgt diese Analysierung bei jeder neuen Positionsbestimmung für beide Koordinatenachsen. Hierbei werden die sich entlang einer Koordinatenachse angeordneten Partikel sämtlich in die andere, senkrecht hierzu verlaufende Koordinatenachse projiziert, insbesondere Werte hinsichtlich der Partikelgewichtung. Es ergibt sich hiernach eine eindimensionale Partikelverteilung, welche weiter zur Verbesserung der Positionsgenauigkeit genutzt wird, zufolge Unterlegung der eindimensional dargestellten Partikelverteilung mit einer Häufigkeitskurve, insbesondere gauß'schen Kurve. Das hierbei ermittelte Maximum, insbesondere ein ermitteltes sprunghaftes Maximum ("Peak") wird bevorzugt gemäß der Wahrscheinlichkeitscharakteristik der Partikelverteilung als sehr gute Näherung für die tatsächliche Position des Geräts bewertet.

In die Bewertung fließt bevorzugt jeder ermittelte Wahrscheinlichkeitswert eines jeden Partikels mit ein, so dass sich Partikel mit einer höheren Gewichtung gegenüber Partikeln mit einer geringeren Gewichtung entsprechend in der Darstellung der eindimensionalen Partikelverteilung niederschlagen. Die ermittelte Peak-Position (Maximum bzw. sprunghaftes Maximum der Häufigkeitskurve) kann sich hierbei signifikant von einer Mittelwertposition unterscheiden. Auch bei einer verhältnismäßig groben Streuung der Partikel ist zufolge des vorgeschlagenen Verfahrens eine Bestimmung der Position des Gerätes in einem Bereich zwischen den Partikeln ermöglicht. Entsprechend ist durch das vorgeschlagene Verfahren ermöglicht, insgesamt weniger Partikel gegenüber dem bekannten Stand der Technik zu streuen, was in vorteilhafter Weise den Algorithmus beschleunigt und den Einsatz einer gegenüber dem Stand der Technik leistungsschwächeren und somit kostengünstigeren Elektronik möglich macht.

Der vorgesehene und aus dem Stand der Technik vorbekannte Rundum-Sensor zur Hinderniserkennung sendet einen Messstrahl aus. Dieser ermittelt den Abstand zu dem Auftreffort des Messstrahls auf das nächste Hindernis, zum Beispiel eine Wand oder ein Möbelstück. Als Messmethode kommt hierbei bevorzugt ein Lichtlaufzeitverfahren (ToF, time of flight) zum Einsatz. Ein Phasenkorrelationsverfahren (PKS) ist diesbezüglich auch möglich. Weiter bevorzugt kommt ein Triangulationsverfahren in Betracht. Der Messstrahl kann als Linie (Divergenzwinkel des Strahls sehr klein, kleiner als 50 mrad, was bevorzugt typischerweise zu einem Strahldurchmesser im Bereich von 1 bis 22 mm führt) oder als ausgedehnter Strahl ausgebildet sein. Hierbei wird bevorzugt ein Strahl mit einer Divergenz von 2 bis 4 mrad verwendet, der bei einer Entfernung von 3 m einen Durchmesser von 20 bis 30 mm erreicht. Der Empfangsbereich des Sensors ist in gleicher Weise bevorzugt als divergente Empfangskeule ausgebildet, wobei zur Kompensation von Toleranzen dessen Divergenz größer ist (z.B. um einen Faktor 2) als der des Sendestrahls.

Der berührungsfrei arbeitende Sensor zur Messung eines Abstandes zu einem Gegenstand ist mit mindestens einer optischen Lichtquelle ausgestattet, welche den Messstrahl erzeugt. Die Lichtquelle sendet Licht im sichtbaren oder unsichtbaren Wellenlängenbereich aus, z.B. rot im Bereich von 650 nm oder grün im Bereich von 532 nm. Bevorzugt wird Licht im Infrarotbereich mit einer Wellenlänge von mehr als 700 nm, weiter bevorzugt Strahlquellen (Laserdioden oder LEDs) mit Wellenlängen von bspw. 785 nm, 850 nm oder 980 nm. Bei der Lichtquelle kann es sich um eine Lampe oder LED handeln, bevorzugt werden jedoch Laserdioden vorgesehen.

Weiter ist der Sensor bevorzugt mit wenigstens einem optischen Empfangselement ausgestattet, welches mindestens im gewählten Wellenlängenbereich des Sende-Elements empfindlich ist, weiter bevorzugt ausgeführt bspw. als mindestens eine Fotodiode, Fotowiderstand, CCD-Chip oder CMOS-Chip. Der optische Empfänger kann als einzelnes Empfangs-Element zur Erfassung eines einzelnen eingehenden Lichtsignals oder als mehrzelliges Array bzw. als mehrzellige Zeile zur simultanen oder sequenziellen Erfassung mehrerer eingehender Lichtsignale ausgebildet sein. Es sind diesbezüglich auch ausgedehnte Sensoren bekannt, bspw. linienförmige oder flächige PSD-Elemente.

Der Lichtquelle und auch dem lichtempfindlichen Element können wahlweise optische Elemente zugeordnet sein (bevorzugt zur Ausformung eines Sendestrahls/Sendekegels bzw. Empfangsstrahls/Empfangskegels), ohne dass diese im Folgenden explizit aufgeführt sind. Optische Elemente können sein Linsen (Sammellinsen, Zerstreuungslinsen, auch als Fresnellinsen ausgeführt, asphärisch oder sphärisch), Blenden (kreisförmig, schlitzförmig, beliebig geformt, als eigene Teile ausgeführt oder im Gehäuse des Sensors integriert), Prismen, Spiegel (plan, konkav, konvex, Freiform), Lichtleiter oder auch Freiformelemente. Unter optischen Elementen werden auch Schutz- oder Abdeckscheiben im optischen Strahlengang verstanden, die dem mechanischen Schutz der optischen Einrichtung dienen. Bevorzugt werden zugeordnet der Lichtquelle und/oder dem lichtempfindlichen Element optische Filter vorgesehen, die für die vorgesehene optische Wellenlänge möglichst gut durchlässig sind, für andere aber jedoch möglichst wenig durchlässig. Optische Filter können als separate Elemente vorgesehen sein oder integriert in anderen optischen Elementen (z.B. Einfärbung oder Beschichtung von Linsen, Schutzfenstern usw.). Möglich sind weiter Einfärbungen, Beschichtungen, Bedampfungen usw. Werden Spiegel verwendet, so sind Oberflächenspiegel bevorzugt, da diese geringere optische Verluste aufweisen. In diesem Fall bietet es sich weiter an, den Spiegel als Kunststoff-Spritzgussteil auszuführen und die eigentliche Spiegelfläche als oberflächige Beschichtung mit einer reflektierenden Schicht vorzusehen. Hier bietet sich die Verwendung von metallischen Schichten an, bspw. Silber, Gold oder Kupfer, weiter bevorzugt Aluminium. Bei Benutzung von Aluminium ist weiter bevorzugt als weitere Beschichtung (Passivierung) eine Korrosionsschutzschicht vorgesehen.

In bevorzugter Ausgestaltung werden innerhalb eines vorgeschlagenen Bereiches Bereiche höherer Aufenthaltswahrscheinlichkeiten und niedriger Aufenthaltswahrscheinlichkeiten definiert, wobei bevorzugt in einem Bereich höherer Aufenthaltswahrscheinlichkeiten mehr Partikel berechnet werden als in den Bereichen niedrigerer Aufenthaltswahrscheinlichkeiten. Entsprechend ergibt sich bevorzugt am Ort der wahrscheinlichsten Geräteposition eine höhere Partikeldichte als weiter bevorzugt in Randbereichen. Insbesondere in diesen Randbereichen der Verteilung sind weiter bevorzugt auch Partikel vorgegeben (niedrige Aufenthaltswahrscheinlichkeiten), um so größere Abweichungen des Gerätes während der Fahrt (bspw. durch Schlupf der Antriebsräder) bei der Lokalisierung berücksichtigen zu können. Das vorgeschlagene Verfahren kommt bevorzugt dann zur Anwendung, wenn nach einer vorgenommenen Partikelverteilung (bevorzugt in Abhängigkeit vom Verfahrweg, Verfahrrichtung und Verfahrstrecke) die Partikelwolke bzw. jeder einzelne gesetzte Partikel mit den in der neuen Position des Gerätes mittels des Sensors ermittelten Ist-Abstandswerten verglichen worden sind. Das durch die Abstandsmessung generierte Abbild der Umgebung bzw. die ermittelten Abstandswerte werden quasi nach und nach auf jeden der einzelnen Partikel projiziert, welche Partikel anhand der Anzahl von Übereinstimmungen von Abstandsdaten gewichtet werden.

Anhand der zunächst ermittelten Varianz (Ausdehnung der Partikelwolke entlang der Koordinatenachsen) wird in weiter bevorzugter Ausgestaltung hinsichtlich der Abweichung von einer Koordinatenachse eine Grenze vorgegeben, jenseits welcher Partikel nicht mehr in die Bewertung einbezogen werden. Entsprechend wird anhand der Varianz bevorzugt eine Schwelle festgelegt, wonach weiter bevorzugt nur Partikel, die vorzugsweise innerhalb der Varianz, ggf. unter Berücksichtigung eines konstanten Faktors, weiter untersucht werden. Anhand der übergebliebenen Partikel wird die analysierte Partikelverteilung bevorzugt dazu genutzt, einen gewichteten Häufigkeitswert der verbliebenen Partikel zu bilden, wobei Partikel nahe eines sprunghaften Maximums ("Peak") in der Häufigkeitskurve stärker in die Analyse eingehen als Partikel, in deren Nähe sich kein sprunghaftes Maximum in der eindimensionalen Darstellung der Partikelverteilung befindet.

In weiter bevorzugter Ausgestaltung werden die Partikel bevorzugt zusätzlich hinsichtlich des Ausrichtungswinkels bewertet. Für den Ausrichtungswinkel des Gerätes wird bevorzugt eine analoge Betrachtung durchgeführt. Alternativ kann der Ausrichtungswinkel eines jeden Partikels auch als zusätzlicher Wert in eine gemeinsame eindimensionale Partikelverteilung einfließen.

Als weiter vorteilhaft erweist es sich, wenn die Partikel vor Durchführung der Bestimmung der Abweichung bewertet werden im Hinblick auf die vorgegebene Bewegung des Gerätes derart, dass die der vorgegebenen Bewegung entsprechenden Partikel eine höhere Bewertung erhalten, bspw. in der Anzahl rechnerisch vermehrt werden. Entsprechend kann bevorzugt ergänzend zu dem vorbeschriebenen Verfahren die Lokalisierung durch die vermutete Bewegung des Gerätes verbessert werden, indem diese Information in die Gewichtung jedes einzelnen Partikels und entsprechend zur Darstellung der Häufigkeitskurve eingeht. Soll sich bspw. das Gerät lediglich auf der Stelle drehen (bspw. Wendemanöver), so erweist es sich als sinnvoll, wenn die Partikel am Ort der letzten bestimmten Position des Gerätes vor der Drehung stärker in den gewichteten Wert eingehen. In diesem Fall kann es weiter ausreichen, zumindest nahezu ausschließlich die Winkelvarianz zu untersuchen. Verfährt das Gerät weiter bspw. primär geradeaus, wird die Winkeländerung geringer sein, wonach entsprechend die Varianz entlang der Koordinatenachsen verstärkt untersucht wird.

Nachstehend ist die Erfindung anhand der beigefügten Zeichnung, welche lediglich ein Ausführungsbeispiel darstellt, näher erläutert. Es zeigt:
- Fig. 1: ein selbsttätig verfahrbares Gerät in Form eines Bodenstaub-Aufsammelgeräts in perspektivischer Darstellung;
- Fig. 2: in schematischer Darstellung eine berechnete Partikelwolke mit entlang einer ersten und einer zweiten Koordinatenachse verteilt angeordneten Partikeln;
- Fig. 3: in schematischer Darstellung die projizierte Anordnung der Partikel einer Koordinatenachse in die zweite Koordinatenachse;
- Fig. 4: die sich aus Fig. 3 ergebende eindimensionale Partikelverteilung bei Hinterlegung einer Häufigkeitskurve zur Ermittlung eines Maximums;

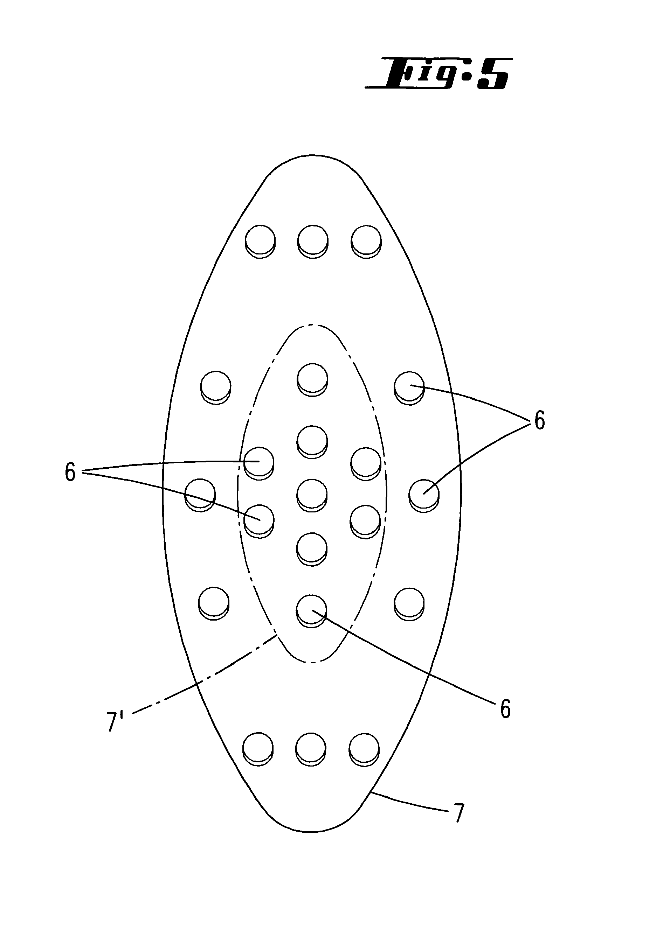

- Fig. 5: in weiterer schematischer Darstellung die Partikelverteilung, bei Festlegung einer in Abhängigkeit von der Varianz der Partikel gewählten Schwelle.

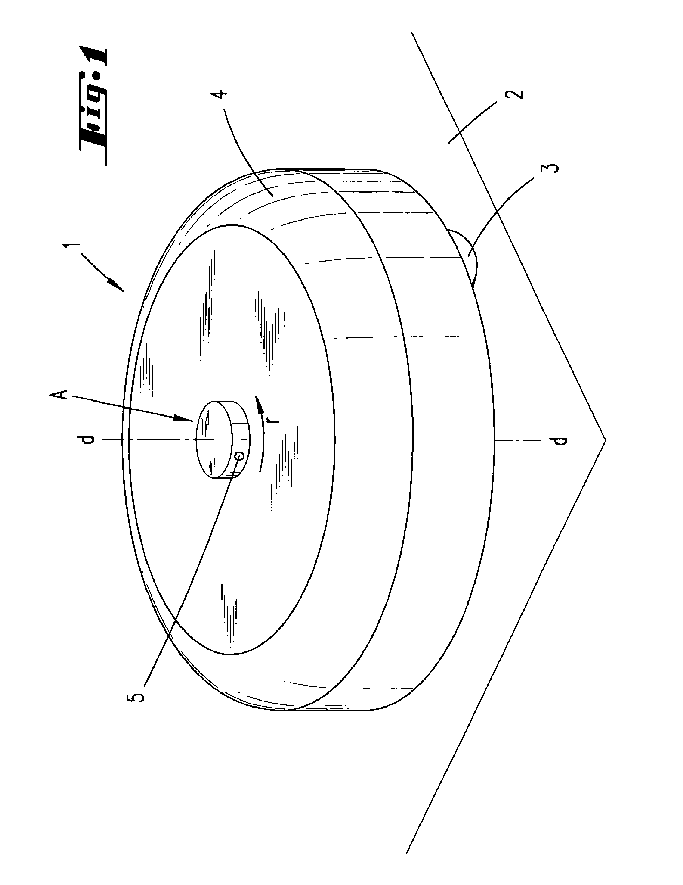

Dargestellt und beschrieben ist zunächst mit Bezug zu Fig. 1 ein Gerät 1 in Form eines Saug- und/oder Kehrgeräts, weiter in Form eines selbsttätig verfahrbaren Haushalts-Saugroboters. Dieses besitzt ein Chassis, welches unterseitig, dem zu pflegenden Boden 2 zugewandt, elektromotorisch angetriebene Verfahrräder 3 sowie bevorzugt eine über die Unterkante des Chassisbodens hinausragende, gleichfalls elektromotorisch angetriebene Bürste trägt. Das Chassis ist überfangen von einer Gerätehaube 4, wobei das Gerät einen kreisförmigen Grundriss aufweist. Bezüglich der Ausgestaltung des Gerätes 1 als Saug- und/oder Kehrgerät wird bspw. auf die eingangs aufgeführte DE 102 42 257 A1 verwiesen.

Weiter kann, wenngleich nicht dargestellt, das Gerät 1 zusätzlich oder auch alternativ zu der Bürste eine Saugmundöffnung aufweisen. In diesem Fall ist in dem Gerät 1 weiter ein Sauggebläsemotor angeordnet, der elektrisch betrieben ist.

Die Elektroversorgung der einzelnen Elektrokomponenten des Gerätes 1 wie für den Elektromotor der Verfahrräder 3, für den Elektroantrieb der Bürste, ggf. für das Sauggebläse und darüber hinaus für die weiter vorgesehene Elektronik in dem Gerät 1 zur Steuerung desselben erfolgt über einen nicht dargestellten, wieder aufladbaren Akkumulator.

Das Gerät 1 ist weiter mit einer Abstands-/Hinderniserkennung A in Form eines ersten, berührungsfrei arbeitenden Sensors 5 versehen, aufweisend eine Lichtstrahl-Aussendevorrichtung und eine Lichtstrahl-Empfangsvorrichtung. Dieser Sensor 5 ist oberseitig der Gerätehaube 4 des Gerätes 1 angeordnet und um eine vertikale Achse d, welche zugleich die Zentralvertikalachse des Gerätes 1 darstellt, drehbar. Der Sensor 5 besteht bevorzugt aus einem Triangulationssystem, mittels welchem eine Rundum-Abstandsmessung (über 360° um die Achse d, Pfeil r in Fig. 1) durchgeführt werden kann.

Mit Hilfe des Sensors 5 ist zunächst eine Hinderniserkennung erreicht, dies zufolge rotierender Abtastung in einer bevorzugt horizontalen Abtastebene, d.h. in einer zu dem Boden 2 parallel verlaufenden Ebene, so dass das Gerät 1 kollisionsfrei sich auf dem Boden 2 bzw. in seiner Umgebung bewegen kann. Darüber hinaus ist, wie weiter bevorzugt, über den Sensor 5 eine Rundum-Abstandsmessung der Umgebung ermöglicht, wobei die hierbei ermittelten Entfernungswerte zu Hindernissen und Wänden in der Umgebung bevorzugt zur Erstellung einer Kartografie des gesamten Gebietes genutzt werden, welche Kartografie in dem Gerät 1 abgespeichert und hinterlegt wird.

Zur Selbstlokalisierung, entsprechend zur gleichzeitigen Bestimmung und Kartenbildung kommt ein SLAM-Verfahren zur Anwendung. Hierbei wird im SLAM eine Vielzahl von möglichen Positionen und Ausrichtungen in Form von Partikeln 6 ausgehend von einer angenommenen ersten, vorherberechneten Position des Gerätes 1 berechnet und nach einer entsprechenden Verfahrbewegung des Gerätes im Hinblick auf die dann eingenommene zweite Position anhand der Messergebnisse der Hinderniserkennung A eine der zuvor generierten Partikel 6 nach einem vorgegebenen, die Wahrscheinlichkeit berücksichtigenden Auswahlalgorithmus als neuer Standort des Gerätes 1 angenommen. Hierbei wird bevorzugt jeder Partikel 6 im Hinblick auf die ermittelten Ist-Abstandswerte mittels der Hinderniserkennung A sowie weiter bevorzugt im Hinblick auf die vorgegebene Verfahrrichtung und/oder Verfahrweite und/oder Verfahrgeschwindigkeit des Gerätes bewertet. Partikel 6, die bspw. der vorgegebenen Verfahrrichtung des Gerätes entsprechen, erhalten hierbei eine höhere Bewertung als die Partikel 6, die nicht im vorgegebenen Verfahrweg liegen. Die höhere Bewertung der Partikel 6 kann bspw. dadurch erreicht werden, dass der gesetzte Partikel 6 rechnerisch vermehrt wird.

Die sich insgesamt ergebende Partikelwolke 7 wird hiernach zunächst hinsichtlich ihrer Ausdehnung analysiert, zufolge Unterlegung eines Koordinatensystems K mit einer ersten Koordinatenachse x und einer senkrecht hierzu ausgerichteten zweiten Koordinatenachse y.

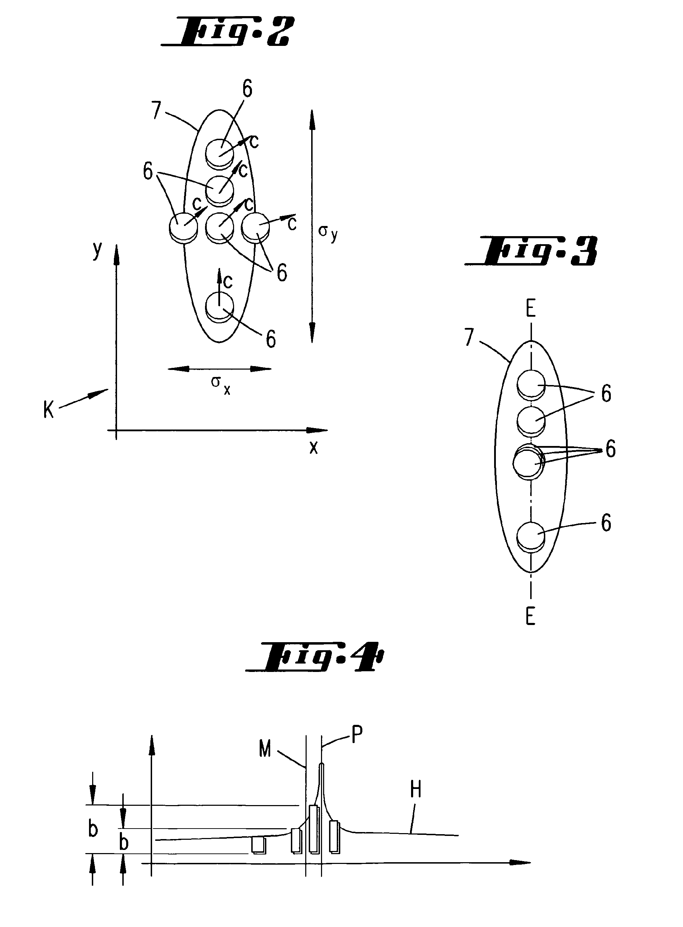

Ist, wie in Fig. 2 beispielhaft dargestellt, die Varianz δₓ relativ klein, bevorzugt unterhalb eines vorgegebenen Schwellwertes, so wird hieraus gefolgert, dass eine relativ gute Lokalisierung in Bezug auf die x-Position vorliegt. Hier kann weiter bspw. allein eine rechnerische Mittelwertbildung zur annähernd exakten Positionsbestimmung des Gerätes ausreichen.

Liegt hingegen eine große Varianz vor, wie bspw. in Fig. 2 die Ausdehnung der Partikelwolke 7 in y-Richtung, so lässt dies darauf schließen, dass in dieser Richtung bezüglich der Positionsbestimmung eine höhere Ungenauigkeit vorliegt (vgl. Varianz δ_{y} in Fig. 2).

Zur Ermittlung der wahrscheinlichsten, bevorzugt exakten Position des Gerätes werden bei einer solchen größeren Varianz die Partikel 6 einer Ausrichtung (in dem Ausführungsbeispiel die Partikel 6 in y-Ausrichtung) sämtlich in die andere Koordinatenachse (in dem Ausführungsbeispiel in die erste Koordinatenachse x) projiziert, weiter bevorzugt gemäß der Darstellung in Fig. 3 quasi in eine gemeinsame y-Ebene E projiziert, zur weiteren Darstellung in einer eindimensionalen Partikelverteilung.

Die so erfasste eindimensionale Partikelverteilung, ggf. unter Berücksichtigung von sich bspw. aus dem Verfahrweg ergebenden Bewertungsgewichtungen, wird gemäß der Darstellung in Fig. 4 mit einer Häufigkeitskurve H in Form einer gauß'schen Verteilungskurve hinterlegt, wobei ein sprunghaftes Maximum P (Peak) als Näherung der tatsächlichen Position des Gerätes 1 bewertet wird. Wie ersichtlich, kann die hierdurch ermittelte Position des Gerätes 1 mit Bezug auf die eindimensionale Partikelverteilung auch zwischen zwei Partikeln 6 bzw. eindimensional in eine Ebene E projizierten Partikeln liegen. Es ist hierdurch eine verbesserte Bestimmung der Position des Gerätes 1 erreicht, insbesondere gegenüber einer allein rechnerischen Mittelwertbildung. Wie in dem Ausführungsbeispiel in Fig. 4 dargestellt, kann sich die Maximalposition P signifikant von einer rechnerisch ermittelten Mittelwertposition M unterscheiden.

Die Höhe b der in Fig. 4 aufgetragenen, in eine Ebene E projizierten Partikel symbolisiert die Wahrscheinlichkeit der Geräteposition.

Bevorzugt wird für die winkelmäßige Ausrichtung des Gerätes 1 (vgl. Pfeile c in Fig. 2) eine analoge Analyse durchgeführt, entsprechend ein gleiches Verfahren verwendet.

Um den Rechenaufwand zur Bestimmung der aktuellen Position des Gerätes 1 weiter zu minimieren, ist in einer Weiterbildung des Verfahrens vorgesehen, anhand der Varianz (δₓ und/oder δ_{y}) eine Schwelle festzulegen, innerhalb welcher Schwelle nur Partikel 6 weiter gemäß dem vorgeschriebenen Verfahren untersucht werden. Es ergibt sich entsprechend innerhalb der Partikelwolke 7 ein Partikelwolken-Unterbereich 7', jenseits welchen Unterbereiches Partikel 6 nicht weiter in die Bewertung einbezogen werden, um so bevorzugt anhand eines sich dann ggf. schärfer einstellenden sprunghaften Maximums P eine weiter verbesserte Positionsbestimmung des Gerätes 1 zu erreichen.

### Bezugszeichenliste:

- 1: Gerät
- 2: Boden
- 3: Verfahrrad
- 4: Gerätehaube
- 5: Sensor
- 6: Partikel
- 7: Partikelwolke
- 7': Partikelwolke-Unterbereich

- b: Wahrscheinlichkeitshöhe
- c: Drehachse
- r: Pfeil
- x: erste Koordinatenachse
- y: zweite Koordinatenachse

- A: Hinderniserkennung
- E: Ebene
- H: Häufigkeitskurve
- K: Koordinatensystem
- M: Mittelwert
- P: Maximum

- δₓ: Varianz x-Achse
- δ_{y}: Varianz y-Achse

## Patentansprüche

1. Verfahren zur Bestimmung der Position eines selbsttätig verfahrbaren Geräts (1), insbesondere selbsttätig verfahrbaren Bodenstaub-Aufsammelgerät, mit vorzugsweise elektromotorisch angetriebenen Verfahrrädern (3), wobei das Gerät (1) mit einer Hinderniserkennung (A) versehen ist, die aus optischen Sende- und Empfängereinheiten besteht, wobei weiter eine Vielzahl von möglichen Positionen und Ausrichtungen ausgehend von einer angenommenen ersten, vorher berechneten Position des Geräts (1) berechnet werden, eine mögliche Position und/oder Ausrichtung des Gerätes ist hierbei auch als Partikel bezeichnet, und nach einem entsprechenden Verfahren des Geräts (1) im Hinblick auf die dann eingenommene zweite Position anhand der Messergebnisse der optischen Einheiten einer der zuvor generierten Partikel (6) nach einem vorgegebenen, die Wahrscheinlichkeit berücksichtigenden Auswahlalgorithmus als neuer Standort des Gerätes (1) angenommen wird, **dadurch gekennzeichnet, dass** die Partikel (6) dahingehend bewertet werden, dass die größte Ausdehnung einer berechneten Partikelwolke (7) mit einer ersten Achse (x, y) eines Koordinatensystems (K) unterlegt wird und dass hiervon ausgehend die Abweichung der Partikel (6) in Richtung der anderen, zweiten Koordinatenachse (y, x) erfasst wird, dass weiter die Partikel (6) sämtlich in die erste Koordinatenachse (x, y) projiziert werden und eine so erfasste Partikelverteilung mit einer Häufigkeitskurve (H) unterlegt wird, wobei eine Maximum (P) der Häufigkeitskurve (H) als Näherung der tatsächlichen Position des Geräts (1) bewertet wird.

2. Verfahren nach Anspruch 1, **dadurch gekennzeichnet, dass** hinsichtlich der Abweichung von der ersten Koordinatenachse (x, y) eine Grenze vorgegeben wird, jenseits welcher Partikel (6) nicht mehr in die Bewertung einbezogen werden.

3. Verfahren nach einem der vorhergehenden Ansprüche, **dadurch gekennzeichnet, dass** die Partikel (6) hinsichtlich des Ausrichtungswinkels bewertet werden.

4. Verfahren nach einem der vorhergehenden Ansprüche, **dadurch gekennzeichnet, dass** die Partikel (6) vor Durchführung der Bestimmung der Abweichung bewertet werden im Hinblick auf die vorgegebene Bewegung des Gerätes (1), derart, dass die der vorgegebenen Bewegung entsprechenden Partikel (6) eine höhere Bewertung erhalten, bspw. in der Anzahl rechnerisch vermehrt werden.

## Claims

1. Method for determining the position of a self-propelled device (1), in particular a self-propelled device for collecting dust from a floor, comprising preferably electric motor-driven travel wheels (3), the device (1) being provided with an obstacle recognition mechanism (A) consisting of optical transmit-receive units, a plurality of possible positions and orientations further being calculated on the basis of an assumed first previously calculated position of the device (1), a possible position and/or orientation of the device also being denoted as a particle in this case, and, following corresponding travel of the device (1), with regard to the second position then assumed, one of the previously generated particles (6), according to a predetermined selection algorithm which takes probability into account, being assumed as the new location of the device (1) on the basis of the measurement results of the optical units, **characterised in that** the particles (6) are assessed such that a first axis (x, y) of a coordinate system (K) is applied to the largest extension of a calculated particle cloud (7) and **in that** the deviation of the particles (6) in the direction of the other, second coordinate axis (y, x) is detected on the basis thereof, **in that** in addition the particles (6) are all projected into the first coordinate axis (x, y) and a frequency curve (H) is applied to a particle distribution thus detected, a maximum (P) of the frequency curve (H) being assessed as an approximation of the actual position of the device (1).

2. Method according to claim 1, **characterised in that** a limit is predetermined with regard to the deviation from the first coordinate axis (x, y), beyond which limit particles (6) are no longer included in the assessment.

3. Method according to either of the preceding claims, **characterised in that** the particles (6) are assessed with regard to the orientation angle.

4. Method according to any of the preceding claims, **characterised in that** the particles (6) are assessed with regard to the predetermined movement of the device (1) prior to the deviation being determined, such that the particles (6) corresponding to the predetermined movement receive a higher score, for example are arithmetically increased.

## Revendications

1. Procédé destiné à déterminer la position d'un appareil déplaçable automatiquement (1), en particulier d'un appareil collecteur de poussière sur les sols déplaçable automatiquement, comprenant des roues de déplacement (3) entraînées de préférence par un moteur électrique, dans lequel l'appareil (1) est équipé d'une détection d'obstacle (A) qui est constituée d'unités optiques d'émission et de réception, dans lequel en outre entendu qu'une pluralité de positions et de directions possibles sont calculées à partir d'une première position admise de l'appareil (1) calculée au préalable, une position et/ou direction possible de l'appareil étant également appelée à ce sujet particule, et qu'après un déplacement correspondant de l'appareil (1), par référence à la deuxième position adoptée à ce moment, l'une des particules (6) générées au préalable est admise comme nouvelle localisation de l'appareil (1) sur la base des résultats de mesure des unités optiques selon un algorithme de sélection prédéfini prenant en considération la probabilité, **caractérisé en ce que** les particules (6) sont analysées avec pour effet que l'étendue la plus grande d'un nuage de particules calculé (7) est calée sur un premier axe (x, y) d'un système de coordonnées (K) et où la déviation des particules (6) est observée sur cette base dans la direction de l'autre axe (y, x), le deuxième des coordonnées, , et **en ce que** les particules (6) sont toutes projetées dans le premier axe (x, y) des coordonnées et une répartition des particules ainsi obtenue est calée sur une courbe de fréquence (H), dans lequel un maximum (P) de la courbe de fréquence (H) est analysé comme un rapprochement de la position effective de l'appareil (1).

2. Procédé selon la revendication 1, **caractérisé en ce qu'**en ce qui concerne la déviation par rapport au premier axe (x, y) des coordonnées, une limite est prédéfinie au-delà de laquelle les particules (6) ne sont plus incluses dans l'analyse.

3. Procédé selon l'une des revendications précédentes, **caractérisé en ce que** les particules (6) sont analysées en ce qui concerne l'angle d'orientation.

4. Procédé selon l'une des revendications précédentes, **caractérisé en ce que** les particules (6) sont analysées avant la réalisation de la détermination de la déviation par référence au déplacement prédéfini de l'appareil (1) de telle sorte que les particules (6) correspondant au déplacement prédéfini obtiennent une évaluation plus élevée, par exemple, **en ce que** leur nombre est multiplié de façon arithmétique.
